**Europäisches Patentamt**

**European Patent Office**

**Office européen des brevets**

(19)

(11) Publication number: **0 108 581**
**A2**

(12) # EUROPEAN PATENT APPLICATION

(21) Application number: **83306604.6**

(22) Date of filing: **31.10.83**

(51) Int. Cl.³: **B 60 R 25/00**

(30) Priority: **02.11.82 IL 67163**

(43) Date of publication of application:
**16.05.84 Bulletin 84/20**

(84) Designated Contracting States:
**AT BE CH DE FR GB IT LI NL SE**

(71) Applicant: **Meir, Jochanan**
**3 Eliezer Rivlin Street**
**Jerusalem(IL)**

(72) Inventor: **Meir, Jochanan**
**3 Eliezer Rivlin Street**
**Jerusalem(IL)**

(74) Representative: **Foster, David Martyn et al,**
**Mathisen, Macara & Co. Lyon House Lyon Road**
**Harrow Middlesex HA1 2ET(GB)**

(54) **Device for the prevention of vehicle theft.**

(57) There is provided a device for the prevention of theft or unauthorized use of road vehicles. The device comprises detent means defining at least one position of tilt of the backrest of the driver's seat suitable for driving the vehicle and at least one other position of tilt of the backrest unsuitable for driving the vehicle, release means adapted to act on the detent means to relase the backrest at least from the other position of tilt, and locking means to prevent unauthorized actuation of the release means.

FIG.1

EP 0 108 581 A2

DEVICE FOR THE PREVENTION OF VEHICLE THEFT

The present invention relates to a device for the prevention of theft or unauthorized use of cars and other road vehicles.

Most anti-theft devices act by immobilizing the steering wheel, thus in effect making it impossible to drive the car. The most widely used of these devices is the steering lock which is locked and unlocked by the ignition key and is in fact an integral part of the steering-column head. While the steering lock constitutes an elegant though rather expensive solution to the problem, it suffers from two main drawbacks: 1) When an attempt is made to force the steering lock (usually by an "amateur" thief, as "professionals" know better), serious and costly damage is liable to be caused to the steering-column.head and/ or steering wheel. 2) Like any other lock, the ignition lock that controls the steering lock is pickable. Having easily picked the car-door lock (or found it altogether unlocked), the prospective thief can now sit down in a relatively inconspicuous, because natural, position, and can try his skill on the ignition and steering lock in comparative privacy.

Other steering locks in the form of external attachments are rather crude and cumbersome contraptions consisting of assorted hooks, metal tubes, bars and catches by means of which the steering wheel or rather one of the steering-wheel spokes is supposed to be anchored to a fixed feature on the car floor, for instance the brake pedal. These locks are very awkward to handle and their use is time-consuming,

- 2 -

if only because at least in small and medium-sized cars they have to be kept in the car boot when not in use. As a consequence, people tend not to make use of them for short-time parking in front of stores, banks, etc., often to their regret.

It is one of the objectives of the present invention to overcome the drawbacks and disadvantages of the prior-art devices and to provide a car-theft prevention device that is relatively inexpensive, does not disfigure the car, is easily applied and cannot be picked in an inconspicuous position and serves as a visual deterrent.

This the present invention achieves by providing a device for the prevention of theft or unauthorized use of road vehicles, comprising detent means defining at least one position of tilt of the backrest of the driver's seat suitable for driving said vehicle, and one other position of tilt of said backrest unsuitable for driving said vehicle, release means adapted to act on said detent means to release said backrest at least from said other position of tilt, and locking means to prevent unauthorized actuation of said release means.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 is a schematic representation of the principle underlying the present invention;

Fig. 2 is a schematic view of a first embodiment of the device according to the invention;

Fig. 3 shows the backrest lock in the "open" position;

Fig. 4 shows the backrest lock in the "locked" position, and

Fig. 5 shows another embodiment of the device according to the invention.

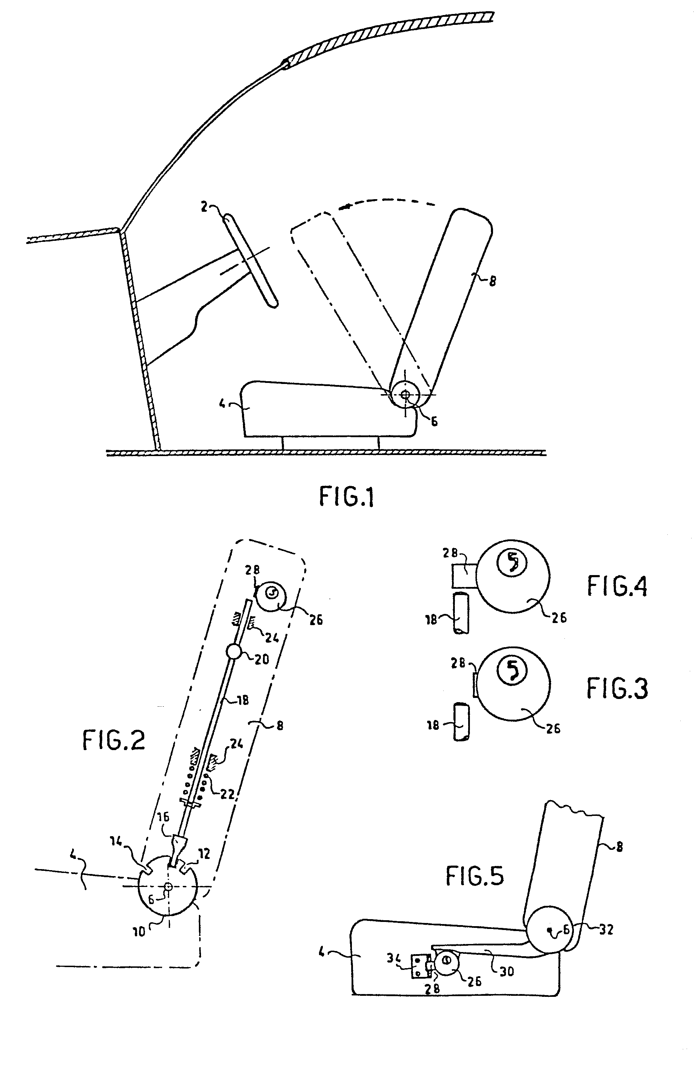

Referring now to the drawings, there is seen in Fig. 1 a schematic representation of the principle underlying the present invention. Shown is a steering wheel 2, the driver's seat 4 and, articulated to it by means of a hinge 6, the backrest 8 which is seen in one of a number of selectable driving positions as indicated by the solid lines, and in the "safe", non-driving position as indicated by the broken lines. In this position, as is clear from the drawing, the backrest 8 is tilted forwards to such a degree as to make driving impossible. Means to maintain the backrest 8 in a given position or to release it therefrom, or to prevent such release action from taking place will be discussed in the following.

One type of mechanism for controlling the backrest position is shown in Fig. 2. There is seen a detent or indexing disk 10 which is stationary with respect to the drive seat 4. This disk 10 is provided with a number of drive-position indexing slots 12, of which in Fig. 2 two are shown. Another indexing slot 14 serves for the "non-driving" or "safe" position indicated in Fig. 1 by the broken lines. An indexing plunger 16 fixedly connected to a rod 18 and shown as engaged in one of the drive-position slots 12, can be withdrawn from the latter by gripping the release knob 20 and pulling it upwards against the restoring force of a compression spring 22. Guide means 24 are provided to enable the rod 18 to move in the direction of its axis only. Pulling the knob 20 upwards will thus permit the backrest 8 to be tilted either to another one of a choice of driving positions, or forward until the plunger 16 drops into the "safe" indexing slot 14.

To arrest now the plunger 16 in this "safe" position, there is provided a lock 26 which in Figs. 2 and 3 is shown in the "open" position, in which it does not provide an obstacle to an upward movement of the rod 18 which movement, as has been explained above, will cause the indexing plunger

- 5 -

16 to withdraw from the indexing slots 12 or 14, enabling
the backrest 8 to be tilted as desired. However, a key
(not shown) inserted into the lock 26 and turned will
cause a bolt 28 to slide forward into a position shown
in Fig. 4, in which it prevents the rod 18 from moving
upwards and disengaging the plunger 16. To restore the
backrest 8 from its "non-drive" or "safe" position, in
which the plunger 16 engages in the slot 14, to one of
the "drive" positions in which it engages in one of the
slots 12, the key must again be inserted into the lock 26
and turned, which will cause the bolt 28 to withdraw to the
position shown in Fig. 3, in which it no longer prevents the
end of the rod 18 from moving upwards. The knob 20 can
then be pulled upwards and the backrest 8 tilted back to
one of the driving positions.

The entire mechanism is of course hidden from sight
by the backrest upholstery, with only the knob 20 and the
face of the lock 26 projecting.

Another embodiment of the device is shown in Fig. 5,
where the lock 26 is fixedly attached to the as such known
release lever 30, the lifting (in some models, depressing)
of which permits the backrest 8 to be tilted. The indexing
disk of this embodiment (hidden behind the masking disk 32)
is of course provided with the additional indexing slot 14
(Fig. 2). In this embodiment, the bolt 28 of the lock 26,
shown here in the locking position, acts in conjunction
with a lock plate 34 to prevent actuation of the release
lever 30.

- 6 -

The device according to the invention is also suitable for cars in which the angle of tilt of the backrest is to be controlled by the angular position of a large knob. In this case, the lock is eccentrically mounted on or in the body of the knob, and a stationary lock plate having a hole is attached to the seat construction in such a position that when, turning the knob, the "safe" forward tilt of the backrest is reached, the lock bolt 28 will be in alignment with the lock-plate hole, thus being able to be introduced into the latter by turning the key.

While in the embodiments discussed above the driver's backrest, tilted into the "safe" position, will always have to be positively locked to prevent its unauthorized return to the "drive" position, an embodiment could be envisaged in which the locking mechanism is of the "spring bolt" or "catch" rather than of the "dead bolt" type used in the previous embodiments. With such a lock the backrest, tilted forward to the "safe" position, would "snap in", rather like the boot lid and could be returned to the "drive" position only by using the key to open the catch.

A further embodiment can be envisaged in which the lock is mounted inside the hinge which, for this purpose, has a larger diameter and, together with the lock, rotates when the back rest is tilted. Upon locking, a spring bolt, produced by the lock mechanism, snaps into an index slot provided in an indexing plate fixedly attached to the seat.

It will be evident to those skilled in the art that the invention is not limited to the details of the foregoing illustrative embodiments and that the present invention may be embodied in other specific forms without departing from the spirit or essential attributes thereof.

CLAIMS:

1.    A device for the prevention of theft or unauthorized use of road vehicles, characterised in that the device comprises detent means (10,12,14,16) defining at least one position of tilt of the backrest (8) of a driver's seat suitable for driving said vehicle, and at least one other position of tilt of said backrest (8) unsuitable for driving said vehicle, release means (18, 20; 30) adapted to act on said detent means (10,12,14,16) to release said backrest (8) at least from said other position of tilt, and locking means (26, 28; 34) to prevent unauthorized actuation of said release means (18,20;30).

2.    A device as claimed in claim 1, characterised in that said detent means (10,12,14,16) comprises an indexing disk (10) having at least one indexing slot (12) defining the position of tilt of the backrest (8) suitable for driving, and one indexing slot (14) for the tilt unsuitable for driving, said indexing disk (10) acting in conjunction with an indexing plunger (16) fitting said slots (12,14).

3.    A device as claimed in claim 2, characterised in that said release means (18,20;30) comprises a rod (18) actuated by means of a gripping knob (20), which rod (18) acts on said indexing plunger (16).

4. A device as claimed in claim 2 or 3, characterised in that said locking means (26, 28; 34) comprise a key-operatable lock (26) comprising a projectable and retractable bolt(28), which bolt (28), in the projected position thereof, prevents said rod (18) from acting on said plunger (16).

5. A device as claimed in claim 1 or 2, characterised in that said release means (18,20;30) comprises a pivotable lever (30) and wherein said lock means (26,28;34), when operative, prevents said lever (30) from being pivoted.

6. A device for the prevention of theft or unauthorized use of road vehicles, characterised in that it comprises detent means (10,12,14,16) defining at least one position of tilt of the backrest (8) of a driver's seat suitable for driving said vehicle, and one other position of tilt of said backrest (8) unsuitable for driving said vehicle, and locking means (26,28;34) to selectively prevent unauthorized actuation of said detent means.

7. A device as claimed in claim 6, characterised in that said detent means (10,12,14,16) comprises a rotary transmission and said locking means is a key-operatable lock attached to the body of said detent means (10,12,14,16).

8.  A device for adjusting the angle of inclination of a backrest (8) of a driver's seat in a vehicle such that the backrest can take up at least one position suitable for driving and another position unsuitable for driving, characterised in that the device is intended to prevent theft of the vehicle and further comprises means (26,28; 34) for locking the backrest (8) in the unsuitable position.

0108581

1/1

FIG.1

FIG.2

FIG.3

FIG.4

FIG.5